# DEMANDE DE BREVET EUROPEEN

(11) **EP 0 692 700 A1**
(43) Date de publication de la demande: **17.01.1996**
(21) Numéro de dépôt: 95401629.1
(22) Date de dépôt: 06.07.1995
(51) Int. Cl.: G01D 5/26, G01B 11/14

(54) **Procédé et dispositif pour la mesure de la distance et de la position d'une surface**

(30) Priorité: 13.07.1994 FR 9408725
(71) Demandeur: EUROPEAN GAS TURBINES SA, F-75116 Paris (FR)
(72) Inventeur: Fally, Jacques, F-91400 Orsay (FR)
(74) Mandataire: Fournier, Michel

(57) **Abrégé**

l'invention concerne un capteur dynamique de distance et de position d'une surface en mouvement devant ledit capteur, comprenant
une voie optique d'émission (2) d'un rayonnement (4) vers la surface (1), et deux voies optique de réception (5, 6) réceptionnant chacune une partie (4A, 4B) du rayonnement (4) réfléchi ou diffusé par ladite surface (1);
un émetteur de rayonnement (2) couplé à l'autre extrémité de la voie optique d'émission (3);
un convertisseur optoélectronique (7, 8) couplé aux autres extrémités de chacune des deux voies optiques de réception (5, 6);
un dispositif de traitement (9) connecté aux convertisseurs optoélectroniques (7, 8);
selon l'invention :
les voies optiques d'émission (3) et de réception (5, 6) ont des axes respectivement d'émission (3A) et de réception (5A, 6A) parallèles entre eux;
les extrémités des voies optiques (3, 5, 6), en regard de la surface (1), sont contenues dans un même plan perpendiculaire aux axes (3A, 5A, 6A) des voies optiques (3, 5, 6), chacune de ces extrémités constituant le sommet d'un triangle quelconque appartenant audit plan, l'un des cotés du triangle issu de l'extrémité de la voie optique d'émission (3) ayant sensiblement une longueur différente que celle de l'autre coté issu de l'extrémité de la voie optique d'émission (3).

## Description

La présente invention concerne les dispositifs et procédés de mesure de distance et de position, en général, et porte, plus particulièrement, sur un capteur dynamique de distance et de position et sur différentes utilisations d'un tel capteur ainsi que sur un procédé de mesure de la distance et de la position d'une surface à analyser.

Il est connu du document "LASER PROXIMITY PROBES FOR THE MEASUREMENT OF TURBINE BLADE TIP RUNNING CLEARANCES", de W. Drinkuth et Al., 1974, ISA ASI 74228 (133-140), un dispositif de mesures optiques par triangulation.

Ce dispositif de mesure de l'état de la technique a pour inconvénient majeur un encombrement important de la tête de mesure.

Le document "THEORETICAL AND EXPERIMENTAL ANALYSIS OF FIBER OPTIC PROXIMITY PROBE", de Leo Hoogenboom et Al., SPIE Vol. 478, Fiber Optic and Laser Sensors II (1984) et US-A-4701610 décrit un capteur optique fonctionnant en mode de réflexion. Ce capteur optique de l'état de la technique permet de déduire un rapport entre l'intensité lumineuse I₂ des fibres émettrices et réceptrices disposées dans la partie centrale de la tête de mesure et l'intensité lumineuse I₁ des fibres réceptrices disposées autour de la partie centrale de la tête de mesure.

Dans chacune de ces zones est disposée une centaine de brins optiques.

Ce capteur optique a comme inconvénient d'être sensible au coefficient de réflexion des surfaces étudiées.

Un autre inconvénient de ce capteur optique est l'encombrement de la tête de mesure;

Un autre inconvénient de ce capteur optique est de ne pas être directif du fait de sa symétrie cylindrique.

Un autre inconvénient de ce capteur optique est qu'il ne permet pas de s'affranchir de façon satisfaisante de la réflectivité ou de la diffusivité variable de la surface de référence.

Cet inconvénient est dû au fait que les zones permettant le recouvrement des signaux optiques sont de surfaces réduites par rapport aux surfaces déterminantes des signaux optiques.

En d'autres termes, la géométrie de ce recouvrement n'est pas pure et dépend de la distance entre la tête de mesure et la surface de référence.

EP-A-0263016 concerne un capteur de déplacement et de proximité à trois fibres optiques alignées. Il y a une fibre émettrice et deux fibres réceptrices de nature différente, de diamètre différent, et d'ouverture numérique différente.

Un tel capteur, du fait de sa construction alignée, et des ouvertures numériques choisies, induit que l'une des fibres réceptrices reçoit une énergie importante, et l'autre ne reçoit que peu d'énergie. Or en matière de métrologie il est constant que des ratios mettant en jeu des valeurs éloignées donnent des résultats de mauvaise qualité par rapport à des ratios mettant en jeu des valeurs du même ordre.

En outre la surface de captage d'énergie est de taille importante, ce qui implique que l'état de surface sur toute la surface de captage peut statistiquement présenter différents aspects.

De ce fait il est nécessaire d'étalonner le capteur pour chaque surface à analyser. En d'autres termes pour chaque surface il convient d'établir une courbe où la distance du capteur à la surface est fonction du rapport des énergies captées par les fibres optiques réceptrices.

US-A-4739161 concerne aussi un capteur de déplacement et de proximité à trois fibres optiques alignées. Il y a une fibre émettrice et deux fibres réceptrices identiques. Le principe de mesure est le même que pour le capteur précédant mais au lieu d'avoir des fibres réceptrices d'ouvertures numériques et de diamètres différents pour obtenir des énergies réfléchies différentes pour chaque fibre réceptrice, il est utilisé, deux fibres réceptrices identiques, l'une d'elle étant éloignée de la surface à analyser d'une distance d₀ supplémentaire par rapport à l'autre fibre.

Cependant les inconvénients cités pour le capteur précédent sont aussi applicables au présent capteur.

En outre aucun des capteurs cité ci-dessus ne dispose d'une chaîne d'acquisition ayant des caractéristiques dynamiques en accord avec les exigences induites pour des mesures de distance et de position sur une turbine à gaz en fonctionnement dont la vitesse de rotation est comprise entre 3000 T/mn et 5100 t/mn et pour des températures au alentour de 800°C.

Un des buts de l'invention est de réaliser un capteur dynamique de distance et de position permettant d'effectuer des mesures en fonctionnement, par exemple sur un compresseur de turbine à gaz.

Conformément au problème que se propose de résoudre le capteur dynamique de distance et de position et le procédé de mesure du déplacement d'une surface à analyser de l'invention, les mesures sont, par exemple, effectuées sur un compresseur de turbine à gaz et portent sur la mesure du jeu existant entre les extrémités d'aubes et le stator de la turbine à gaz.

Conformément au problème que se propose de résoudre le capteur dynamique de distance et de position et le procédé de mesure du déplacement d'une surface à analyser de l'invention, les mesures sont, par exemple, effectuées sur un compresseur de turbine à gaz et portent également sur la mesure des caractéristiques de vibrations radiales du rotor dans la zone centrale de la machine.

Un autre but du capteur dynamique de distance et de position et du procédé de mesure du déplacement d'une surface à analyser de l'invention est de permettre d'effectuer des mesures en fonctionnement sur une turbine à gaz dont la vitesse de rotation de la turbine est comprise entre 3000 T/mn et 5100 T/mn.

Un autre but du capteur dynamique de distance et de position et du procédé de mesure en déplacement sur compresseur de turbine à gaz de l'invention est de permettre d'effectuer des mesures en fonctionnement sur une turbine à gaz à un emplacement dont la température est de l'ordre de 800°C.

Un autre but du capteur dynamique de distance et de position et du procédé de mesure d'une surface à analyser est d'obtenir une réponse sensiblement indépendante de l'état de surface de la surface à analyser.

A cet effet l'invention concerne un capteur dynamique de distance et de position d'une surface en mouvement devant ledit capteur, comprenant :
une voie optique d'émission d'un rayonnement vers la surface, et deux voies optique de réception réceptionnant chacune un rayonnement réfléchi ou diffusé par ladite surface, chacune des voies optiques ayant une extrémité en regard de la surface, lesdites extrémités formant la sonde du capteur;
un émetteur de rayonnement couplé à l'autre extrémité de la voie optique d'émission pour générer le rayonnement émis vers la surface;
un convertisseur optoélectronique couplé aux autres extrémités de chacune des deux voies optiques de réception, pour convertir en signal électrique le rayonnement réfléchi ou diffusé reçu par la voie optique de réception couplée;
un dispositif de traitement connecté aux convertisseurs optoélectroniques pour traiter les signaux électriques issus desdits convertisseurs optoélectroniques,
selon l'invention:
les voies optiques d'émission et de réception ont des axes respectivement d'émission et de réception parallèles entre eux;
les extrémités des voies optiques, en regard de la surface, sont contenues dans un même plan perpendiculaire aux axes des voies optiques, chacune de ces extrémités constituant le sommet d'un triangle quelconque appartenant audit plan, l'un des cotés du triangle issu de l'extrémité de la voie optique d'émission ayant sensiblement une longueur différente de celle de l'autre coté issu de l'extrémité de la voie optique d'émission.

Les voies optiques ont la même ouverture numérique, le même diamètre, et les mêmes caractéristiques optiques.

La sonde est mobile en rotation autour d'un axe parallèle aux axes des voies optiques.

Chacun des convertisseurs optoélectroniques a une constante de temps de montée de conversion inférieure à un temps déterminé correspondant à une fréquence maximale prédéterminée d'échelons de distance.

Le dispositif de traitement comprend, connectés en aval de chacun des convertisseurs optoélectroniques, des moyens amplificateurs de courant du signal électrique issu du convertisseur optoélectronique connecté, lesdits moyens amplificateurs ayant une bande passante comprise entre 0 Hz et N fois la fréquence maximale prédéterminée, N correspondant au rang de la première harmonique d'un signal à fréquence maximale prédéterminée, ayant une amplitude inférieure à une valeur seuil correspondant à une fraction prédéterminée de l'amplitude des échelons de distance.

Le dispositif de traitement comprend, en outre, connectée en aval des moyens amplificateurs de courant,
une carte d'acquisition numérique ayant des moyens d'échantillonnage simultané des signaux électriques amplifiés issus de chacun des moyens amplificateur de courant, et des moyens de stockage temporaire d'une campagne de mesure,
des moyens de stockage permanent, et
des moyens de traitement ou de post-traitement des valeurs numériques simultanées échantillonnées, la fréquence d'échantillonnage étant supérieure à au moins 2 fois la borne supérieure de la bande passante des moyens amplificateurs.

Les moyens de post-traitement comprennent des moyens pour calculer du rapport R(t) entre les valeurs numériques simultanées échantillonnées relatives à un élément de surface de la surface, en regard de la sonde au temps t, et pour déduire du rapport R(t) et d'une courbe étalon ou équivalent la distance entre le capteur et ledit élément de surface.

Les moyens de post-traitement comprennent, en outre, un enregistrement de tableau étalon à trois dimensions ou équivalent et des moyens pour déduire la réflectivité de l'élément de surface, dudit tableau, en fonction de la distance entre le capteur et l'élément de surface de l'une des valeurs numériques échantillonnées.

Les convertisseurs optoélectroniques sont des photodiodes à semi-conducteur Si.

Les convertisseurs optoélectroniques sont des photodiodes à semi-conducteur AsGa.

La longueur d'onde du rayonnement émis est sensiblement proche de la zone maximale de la réponse spectrale des convertisseurs optoélectroniques.

La surface en mouvement comprenant les têtes d'aubes d'un compresseur de turbine à gaz en fonctionnement, le capteur étant monté sur le stator, la fréquence maximale prédéterminée étant égale à la fréquence de défilement des têtes d'aubes devant la sonde. Le capteur dynamique comprend, en outre, un capteur de position angulaire du rotor du compresseur connecté à la carte d'acquisition numérique, ladite carte d'acquisition numérique ayant des moyens pour acquérir la position angulaire du rotor au temps t, et l'associer avec les valeurs numériques simultanées échantillonnées relatives à un élément de surface de la surface en regard de la sonde au temps t.

L'invention concerne aussi un procédé de mesure de position d'un élément de surface d'une surface en mouvement devant un capteur selon l'invention comprenant les étapes suivantes :
- un rayonnement est émis vers la surface par la voie optique d'émission;
- chacune des deux voies optiques de réception reçoit une partie du rayonnement réfléchi ou diffusé par l'élément de surface en regard de la sonde à l'instant t, la voie optique de réception la plus proche de la voie optique d'émission captant une partie du rayonnement plus importante que celle de la voie optique de réception la plus éloignée de la voie optique d'émission;
- chaque convertisseur optoélectronique convertit en un signal électrique la partie du rayonnement reçue par la voie optique de réception à laquelle il est couplé;
- chaque signal électrique converti est traité par le dispositif de traitement.

Dans le dispositif de traitement,
- chaque signal électrique est amplifié par les moyens amplificateurs de courant, puis
- les signaux amplifiés présents en sortie des moyens amplificateur de courant sont simultanément échantillonnés par les moyens d'échantillonnage, puis les valeurs numériques simultanées échantillonnées relatives à un élément de surface de la surface, en regard de la sonde au temps t, sont stockées dans les moyens de stockage en vue d'un post-traitement.

Un avantage du capteur dynamique de distance et de positionnement selon l'invention provient du fait que le positionnement en triangle des voies optiques permet d'avoir deux lunules de rayonnement réfléchi ou diffusé, proche l'une de l'autre, et ayant un ordre de grandeur sensiblement équivalent. Ces caractéristiques permettent d'avoir une courbe d'étalonnage du capteur unique quel que soit l'état de surface de la surface à analyser.

Un autre avantage de la présente invention résulte du fait que les caractéristiques dynamiques du capteur sont fonction d'une fréquence maximale préétablie au-delà de laquelle on ne souhaite plus distinguer les échelons de distance.

Un autre avantage du capteur dynamique et du procédé de mesure de la distance et de la position d'une surface à analyser selon l'invention est la possibilité d'obtenir d'une autre information, à savoir une mesure de la réflectivité de la surface à analyser permettant de déduire l'état d'usinage ou d'oxydation de la surface analysée.

Un autre avantage du capteur dynamique de distance et de position est de permettre de déduire l'inclinaison de la surface à analyser.

Un autre avantage du capteur dynamique de distance et de position et du procédé de mesure du déplacement d'une surface à analyser selon l'invention est la possibilité d'effectuer des mesures sur des surfaces à haute température.

Un autre avantage de la présente invention est de pouvoir déduire l'excentration de l'axe d'un rotor en rotation, ou les vibrations du rotor en rotation.

D'autres buts, caractéristiques et avantages de l'invention apparaîtront à la lecture de la description du mode de réalisation préféré du capteur dynamique de distance et de position et du procédé de mesure du déplacement d'une surface à analyser, description faite en liaison avec les dessins dans lesquels:
- la figure 1 représente un premier mode de réalisation du capteur dynamique de distance et de position conforme à l'invention,
- la figure 2 représente un second mode de réalisation du capteur dynamique de distance et de position conforme à l'invention,
- la figure 3 représente l'ensemble des rayonnements sur la surface à analyser et illustre le principe optique mis en oeuvre par le capteur dynamique de distance et de position,
- la figure 4 est une vue de l'extrémité active de la sonde du capteur dynamique conforme à l'invention,
- la figure 5 représente un graphique illustrant l'indépendance de la mesure de distance vis-à-vis de l'état de surface de la surface à analyser,
- la figure 6 représente un mode de mise en oeuvre du capteur dynamique selon l'invention pour la mesure de positionnement sur compresseur de turbine à gaz et
- la figure 7 illustre le principe de mise en oeuvre préférée du procédé de mesure de l'invention.

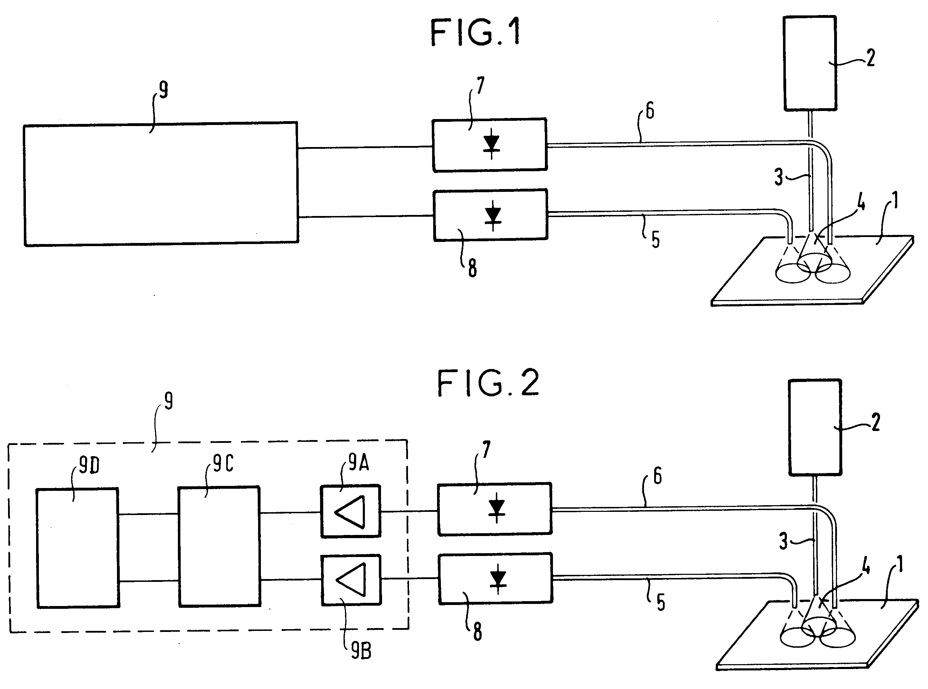

La figure 1 représente un premier mode de réalisation du capteur dynamique de distance et de position conforme à l'invention.

Le capteur dynamique de distance et de position d'une surface à analyser 1 comporte, d'une manière générale :
un émetteur de rayonnement 2 couplé à une extrémité d'une voie optique d'émission 3 du rayonnement vers la surface à analyser;
deux voies optiques de réception 5, 6, ayant chacune une extrémité en regard de la surface 1 à analyser, l'autre extrémité étant couplée à un convertisseur optoélectroniques 7, 8; et
un dispositif de traitement 9 connecté aux convertisseurs optoélectroniques 7, 8.

Un émetteur de rayonnement 2 permet l'émission d'un rayonnement 4. Ce rayonnement 4 émis est injecté et se propage dans la voie optique d'émission 3.

La voie optique d'émission 3 est telle que la propagation du rayonnement 4 émis se fasse en direction de la surface à analyser 1. Le rayonnement 4 émis se réfléchit sur la surface à analyser 1.

Les voies optiques de réception 5, 6 collectent une première 4A et une seconde 4B partie du rayonnement 4 émis par les moyens optiques d'émission 2 puis réfléchi ou diffusé par la surface à analyser 1.

Chaque convertisseur optoélectronique 7, 8 convertit en un signal électrique la partie 4A, 4B du rayonnement 4 collectée par la voie optique 5, 6 à laquelle il est couplé.

Le signal électrique délivré par chacun des convertisseurs optoélectroniques est transmis à un dispositif de traitement 9.

Les voies optiques 3, 5, 6 ont des axes d'émission ou de réception 3A, 5A, 6A parallèles entre eux.

Les extrémités des voies optiques 3, 5, 6 en regard de la surface 1, sont contenues dans un même plan, perpendiculaire aux axes des voies optiques 3, 5, 6 Ces trois extrémités constituent la sonde 10 du capteur.

Selon une caractéristique importante de l'invention, chaque extrémité constitue le sommet d'un triangle quelconque appartenant audit plan.

En outre les côtés du triangle issus de l'extrémité de la voie d'émission 3 sont de longueurs différentes.

La figure 2 représente un second mode de réalisation du capteur dynamique à l'invention.

Les éléments repris dans ce second mode de réalisation et décrits en liaison avec la figure 1 portent les mêmes références.

Le dispositif de traitement 9 comprend, connectés en aval de chaque convertisseur optoélectronique 7, 8, des moyens amplificateurs 9A, 9B pour amplifier le signal électrique issu du convertisseur optoélectronique 7, 8 auquel ils sont connectés.

Le dispositif de traitement 9 comprend en outre, connectés en aval des moyens amplificateurs 9A, 9B, des moyens 9C pour échantillonner et numériser simultanément le signal électrique amplifié issu des moyens amplificateurs 9A, 9B de chacune des voies optiques de réception 5, 6, et pour stocker temporairement les valeurs numériques simultanées échantillonnées, et des moyens 9D pour stocker définitivement les valeurs numériques simultanées échantillonnées, et pour traiter ou post-traiter lesdites valeurs numériques simultanées échantillonnées.

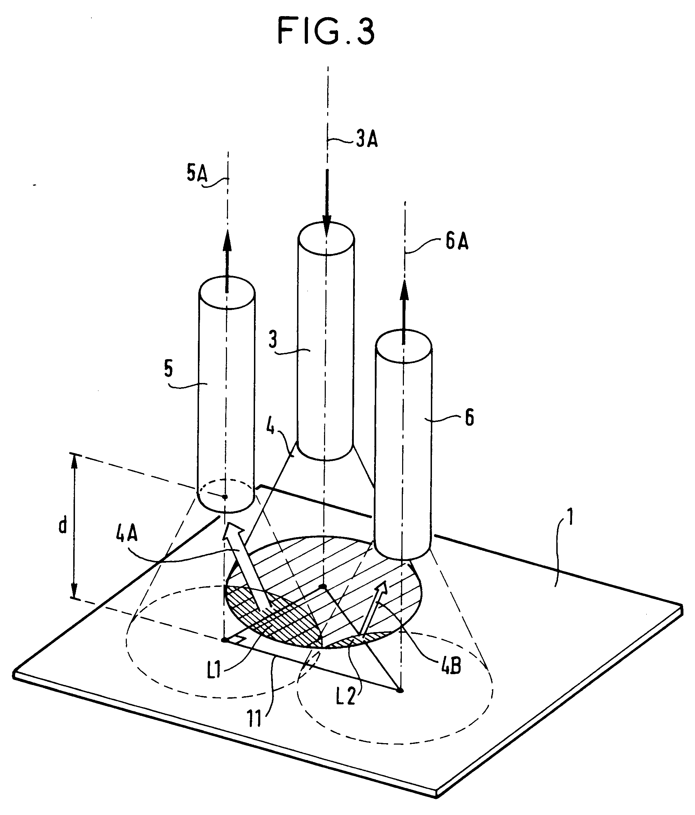

La figure 3 montre, plus particulièrement, le rayonnement émis 4, et les parties 4A, 4B du rayonnement 4 réfléchi ou diffusé par la surface à analyser 1.

On retrouve sur cette figure 3 la voie optique d'émission 3 du rayonnement 4 émis ainsi que les voies optiques de réception 5, 6, respectivement, de la première 4A et de la seconde 4B partie du rayonnement 4 réfléchi ou diffusé.

Le rayonnement émis 4 se présente sous forme d'un cône de rayonnement éclairant un élément de surface de la surface à analyser. Les voies optiques de réception 5, 6 captent les rayonnements compris dans leur cône de captage respectif. Les première 4A et seconde 4B parties du rayonnement 4 réfléchi ou diffusé correspondent aux lunules d'intersection entre la base du cône de rayonnement et, respectivement, la base du cône de captage de la voie optique de réception 5 la plus proche de la voie optique d'émission 3, et la base du cône de captage de la voie optique de réception 6 la plus éloignée de la voie optique d'émission 3.

Dans un mode de réalisation préféré, la voie optique d'émission est une fibre optique d'émission 3, et les voies optiques de réception 5, 6 sont des fibres optiques de réception, les trois fibres optiques ayant toutes un même diamètre et une même ouverture numérique (angle du sommet du cône d'émission ou de captage) . De préférence les fibres optiques ont les mêmes caractéristiques, par exemple ce sont des fibres optiques à saut d'indice.

Cette figure 3 illustre également le principe optique mis en oeuvre par le capteur dynamique de distance et de position. Ce principe, connu par ailleurs, consiste à faire le rapport R de la seconde 4B partie du rayonnement 4 réfléchi ou diffusé par la première partie 4A du rayonnement 4 réfléchi ou diffusé, la distance d séparant la sonde 10 du capteur de l'élément de surface ayant réfléchi ou diffusé le rayonnement 4 étant une fonction de ce rapport R.

Dans l'art antérieur, du fait de la disposition non optimisée des voies optiques (alignées dans un même plan ou concentriques), cette fonction est très dépendante de l'état de surface de la surface à analyser.

Dans le cas de surfaces fixes accessibles cela n'est pas dérangeant. En revanche, dans le cas de surfaces en déplacement, et, qui plus est, inaccessibles, cela implique que les différents états de surface de la surface à analyser doivent être très exactement connus et repérés préalablement à l'utilisation du capteur afin que pendant le déplacement de la surface sous le capteur, le système détermine quelle fonction utilisée et sur quel élément de surface il doit l'utiliser.

Selon l'invention, le rapport R est compris entre 0 et 1. En effet, l'énergie résultant de la seconde 4B partie captée par la voie optique de réception 6 la plus éloignée de la voie optique d'émission 3, est toujours inférieure à l'énergie résultant de la première partie 4A captée par la voie optique de réception 5 la plus proche de la voie optique d'émission 3.

La construction en triangle de la sonde 10 est une caractéristique qui permet d'avoir des lunules L1, L2 proches l'une de l'autre, voire même partiellement superposées l'une à l'autre ; et des lunules L1, L2 ayant des surfaces sensiblement du même ordre de grandeur bien que différentes.

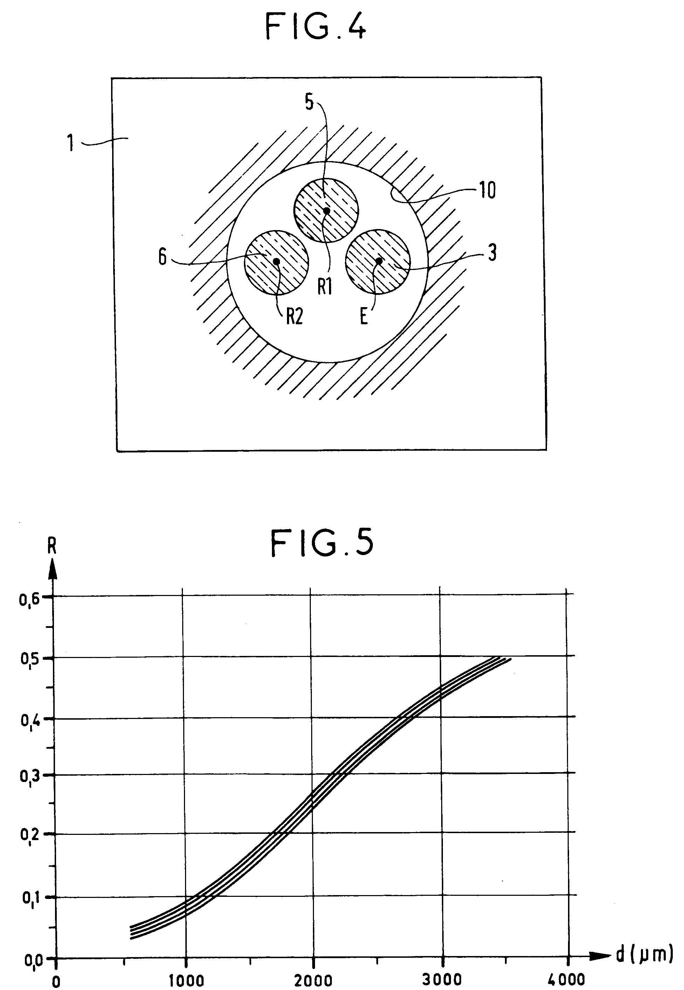

Le graphique de la figure 5 représente, pour quatre états de surface de la surface à analyser, la valeur du rapport R entre les valeurs de la seconde 4B et de la première 4A partie du rayonnement 4 réfléchi ou diffusé en fonction de la distance d entre la sonde 10 du capteur dynamique selon l'invention et la surface à analyser.

La courbe supérieure représente un état de surface ayant une rugosité Rₐ de l'ordre de 1,6 µm, et la courbe inférieure représente un état de surface ayant une rugosité Rₐ de l'ordre de 0,05µm.

Ainsi, avec le capteur selon l'invention, la distance d entre la sonde du capteur et la surface à analyser est sensiblement fonction d'une même interpolation polynomiale en R quel que soit l'état de surface de la surface à analyser compris entre 0,05 µm et 1,6 µm. La distance d minimale étant de l'ordre du millimètre.

Comme indiqué précédemment, la fibre émettrice 3 et les deux fibres réceptrices 5, 6 sont disposées chacune sur un sommet d'un triangle.

Le triangle est quelconque à condition que ses deux côtés partant de la fibre émettrice 3 soient inégaux.

La figure 4 est une vue de l'extrémité active de la sonde 10 du capteur dynamique conforme à l'invention.

Les fibres optiques sont disposées, respectivement, aux sommets d'un triangle.

La lettre E désigne le sommet du triangle recevant la fibre optique émettrice 3, les lettres R₁ et R₂ désignant les sommets du triangle recevant chacun une fibre optique réceptrice 5, 6.

La longueur ER₁ et ER₂ des côtés du triangle, pour un diamètre donné de fibre, sera choisie en fonction de la distance de travail ou de l'ordre de grandeur estimé de la distance d.

De manière à obtenir un capteur à grande distance frontale il est préférable d'augmenter la longueur des côtés du triangle.

Les proportions du triangle sont choisies pour déterminer la sensibilité du capteur.

La variation de la distance d, qui est fonction de la variation du rapport R, sera d'autant plus sensible que les côtés ER₁ et ER₂ seront de longueur très proches.

D'autres caractéristiques de la présente invention résultent des aspects dynamiques du capteur nécessaires à une bonne acquisition des informations lorsque la surface à analyser est en mouvement devant le capteur.

Chacun des convertisseurs optoélectroniques 7, 8 a une constante de temps de montée de conversion inférieure à un temps déterminé correspondant à une fréquence maximale prédéterminée d'échelons d'énergie captée. Cet échelon d'énergie correspond à une variation brutale de la distance d. Cette fréquence maximale est la fréquence au-delà de laquelle les convertisseurs optoélectroniques 7, 8 ne pourront plus convertir sans atténuation l'échelon d'énergie, introduisant de ce fait une erreur dans le rapport R et donc dans la détermination de la distance d.

Ces convertisseur optoélectroniques 7, 8 peuvent être par exemple des photodiodes de type PIN au silicium ou des photodiodes de type AsGa.

La source ou générateur 2 de rayonnement 4 peut être avantageusement une simple LED. Cependant, pour un fonctionnement optimal, la longueur d'onde de la LED doit être proche de la zone maximale de la réponse spectrale des convertisseurs optoélectroniques 7, 8. Par exemple pour les photodiodes citées plus haut, des LED de longueur d'onde de 655 nm ou de 850 nm sont utilisables.

Les convertisseurs optoélectroniques 7, 8 peuvent travailler en courant ou photocourant (convertisseurs en court-circuit), ou bien en tension (convertisseurs débitant dans une résistance de charge).

Avantageusement on choisira de travailler en courant, le photocourant du convertisseur optoélectronique 7, 8 étant directement proportionnel au flux de rayonnement 4 réfléchi ou diffusé capté par la voie optique de réception 5, 6.

Les moyens amplificateurs 9A, 9B ont une bande passante comprise entre 0 Hz et N fois la fréquence maximale prédéterminée, N correspondant au rang de la première harmonique d'un signal à fréquence maximale prédéterminée, ayant une amplitude inférieure à une valeur seuil.

Par exemple dans le cas de signaux en créneaux N peut être choisi supérieur ou égal à 8.

Cette caractéristique est nécessaire pour que l'amplification du signal électrique issu du convertisseur optoélectronique 7, 8 ne subisse aucune atténuation ou déformation.

Les moyens amplificateurs 9A, 9B sont avantageusement des amplificateurs de courant, montés connectés sur les convertisseurs optoélectroniques 7, 8.

En pratique sur les surfaces usinées, les flux du rayonnement 4 réfléchi ou diffusé sont faibles, de ce fait les signaux électriques résultant doivent être fortement amplifiés. Par exemple le gain des moyens amplificateurs 9A, 9B est avantageusement supérieur ou égal à 10⁶ V/A.

La fréquence d'échantillonnage de la carte d'acquisition numérique est supérieure à au moins 2 fois la borne supérieure de la bande passante des moyens amplificateurs 9A, 9B.

Pour des signaux comportant des harmoniques d'une importance significatives jusqu'à un rang élevé, il est convenable de prendre une fréquence d'échantillonnage de l'ordre de 8 à 10 fois la borne supérieure de la bande passante des moyens amplificateur 9A, 9B.

Les moyens traitement ou de post-traitement 9D selon l'invention comprennent des moyens pour calculer du rapport R(t) entre les valeurs numériques simultanées échantillonnées relatives à un élément de surface de la surface, en regard de la sonde 10 au temps t, et pour déduire du rapport R(t) et de l'interpolation polynomiale ou équivalent la distance d entre le capteur et ledit élément de surface.

Après avoir déterminé la distance d, la réflectivité de la surface à analyser 1 est déduite de la valeur de l'intensité lumineuse de la première 4A ou de la seconde 4B partie du rayonnement 4 réfléchi ou diffusé par la surface à analyser 1.

Pour ce faire, on utilise des courbes caractéristiques de variation de l'intensité lumineuse de la première 4A et de la seconde 4B partie du rayonnement réfléchi ou diffusé en fonction de la distance d. Chaque courbe représente un état de surface donné, la courbe correspondant au couple distance d, valeur de l'intensité lumineuse de la première 4A ou de la seconde 4B partie du rayonnement réfléchi ou diffusé indique l'état de surface de l'élément de surface considéré.

Les moyens de traitement ou de post-traitement comprennent donc un enregistrement d'un tableau de référence ou équivalent intégrant lesdites courbes, et des moyens pour déduire la réflectivité de l'élément de surface, à partir du tableau, et, en fonction de la distance d entre le capteur et l'élément de surface, et de l'une des valeurs numériques échantillonnées.

Selon une caractéristique de l'invention, la sonde du capteur est mobile en rotation autour d'un axe parallèle aux axes des fibres.

Cette particularité de la sonde permet de faire plusieurs mesures sur un élément de surface donné en faisant pivoter la sonde du capteur après chaque mesure. La comparaison des différents distances d, obtenues de ces mesures, permet de déterminer la pente de l'élément de surface considéré par rapport au plan de la sonde du capteur.

Ce même capteur dynamique de distance et de position peut de plus être utilisé pour la mesure en fonctionnement, sur un compresseur de turbine à gaz, de jeux et/ou de vibrations.

Le capteur dynamique de distance et de position peut être utilisé pour la mesure du jeu entre les extrémités d'aubes et le stator et/ou pour la mesure des caractéristiques de vibration d'un rotor, notamment dans la zone centrale de la machine.

Enfin, le capteur dynamique de distance et de position peut être utilisé pour la mesure en fonctionnement sur des étages de turbine à gaz ou à vapeur des jeux et/ou des vibrations.

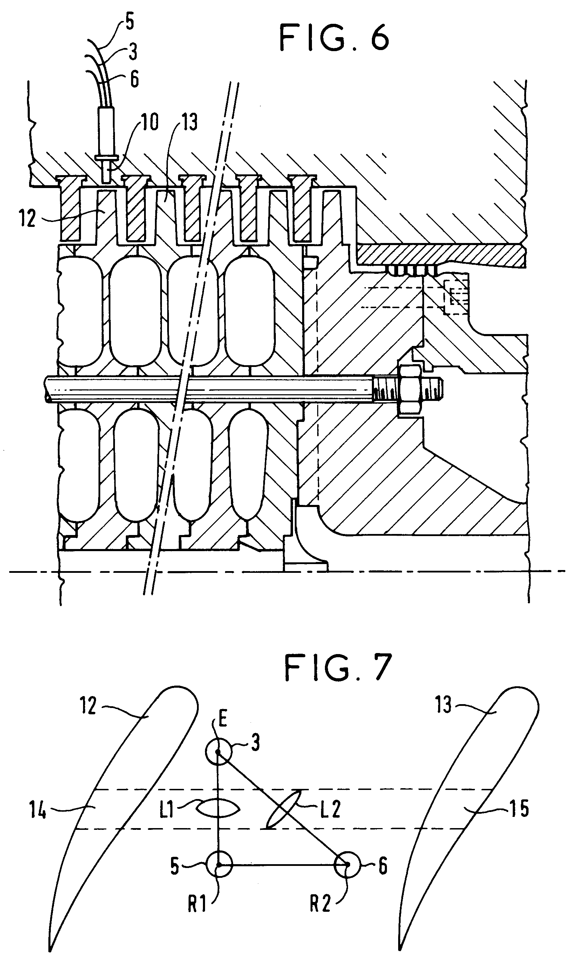

La figure 6 illustre un mode de mise en oeuvre du capteur dynamique de distance et de position selon l'invention pour la mesure du jeu en bout d'ailettes ainsi que pour la mesure des vibrations du rotor d'un compresseur de turbine à gaz.

La figure 6 représente donc une vue d'ensemble d'un rotor d'un compresseur de turbine à gaz.

Dans ce mode de mise en oeuvre du capteur dynamique de distance et de position, la tête 10 du capteur, comportant la fibre optique émettrice 3 et les deux fibres optiques réceptrices 5, 6, est disposée face à une extrémité d'une ailette mobile 12.

Dans le cas d'un étage de compresseur de turbine à gaz comptant 60 aubes, et ayant une vitesse nominale de rotation de 5100tr/mn les têtes d'aube défilent devant la sonde du capteur avec une fréquence de 5,1 kHz pour une température ne dépassant pas 350°C.

Les deux signaux générés au niveau des photodiodes ont donc la forme d'un signal en créneau. Selon l'invention la borne supérieure de la bande passante des moyens amplificateurs doit être au moins N fois 5,1 kHz avec N=8 soit 40,8 kHz.

La carte d'acquisition numérique a une fréquence d'échantillonnage de 400 kHz soit 8 à 10 fois la borne supérieure de la bande passante des moyens amplificateurs. Une tête d'aube passant devant le capteur en 15 µs, on obtient donc entre 6 et 7 points de mesure sur chaque tête d'aube.

Dans la mesure de la distance d et de ses variations sur différentes têtes d'aubes 12, 13 de la roue de compresseur de turbine à gaz, la sonde de mesure du capteur de l'invention est orientée par rotation autour de son axe de telle manière que les deux lunules L₁ et L₂ passent successivement sur les mêmes zones 14, 15 sur les têtes d'aubes.

Ce principe de mise en oeuvre préférée du procédé de mesure de l'invention est illustré sur la figure 7.

Un avantage de cette mise en oeuvre préférée, est de minimiser les variations de réflectivité sur les têtes d'aubes, du fait que la mesure se fait sur une bande étroite, inférieure à 1 mm de largeur.

Le décalage des signaux de la première 4A et de la seconde 4B partie de l'onde lumineuse 4 dans l'échelle du temps est ensuite corrigé par exemple numériquement, selon une méthode connue non décrite.

Le capteur comprend en outre un top tour (non représenté) de façon à repérer chaque mesure par rapport à un repère angulaire.

La campagne de mesure se fait sur une quinzaine de tours, puis les profils temporels de distance obtenus sont moyennés, la transformée de Fourier du profil temporel est calculée et de cette transformée peut être déduit, l'excentration de l'axe du rotor et/ou les vibrations sur l'axe du rotor.

Cet exemple est donné à titre illustratif et n'est aucunement limitatif de l'utilisation que l'on peut faire du capteur selon l'invention.

Dans le cadre d'applications à température plus basse, par exemple inférieure à 85 °C, il est possible d'utiliser des fibres optiques en polymère (PMMA). Un avantage de cette solution est de permettre la réalisation de capteur selon l'invention, à coût réduit.

## Revendications

1. Capteur dynamique de distance et de position d'une surface en mouvement devant ledit capteur, comprenant :
une voie optique d'émission (3) d'un rayonnement (4) vers la surface (1), et deux voies optique de réception (5, 6) réceptionnant chacune une partie (4A, 4B) du rayonnement (4) réfléchi ou diffusé par ladite surface (1), chacune des voies optiques (3, 5, 6) ayant une extrémité en regard de la surface (1), lesdites extrémités formant la sonde (10) du capteur;
un émetteur de rayonnement (2) couplé à l'autre extrémité de la voie optique d'émission (3) pour générer le rayonnement (4) émis vers la surface (1);
un convertisseur optoélectronique (7, 8) couplé à l'autre extrémité de chacune des deux voies optiques de réception (5, 6), pour convertir en signal électrique les parties (4A, 4B) du rayonnement (4) réfléchi ou diffusé reçu par la voie optique de réception (5, 6) couplée;
un dispositif de traitement (9) connecté aux convertisseurs optoélectroniques (7, 8) pour traiter les signaux électriques issus desdits convertisseurs optoélectroniques (7, 8),
caractérisé en ce que :
les voies optiques d'émission (3) et de réception (5, 6) ont des axes respectivement d'émission (3A) et de réception (5A, 6A) parallèles entre eux;
les extrémités des voies optiques (3, 5, 6), en regard de la surface (1), sont contenues dans un même plan perpendiculaire aux axes (3A, 5A, 6A) des voies optiques (3, 5, 6), chacune de ces extrémités constituant le sommet d'un triangle quelconque appartenant audit plan, l'un des côtés du triangle issu de l'extrémité de la voie optique d'émission (3) ayant sensiblement une longueur différente que la longueur de l'autre coté issu de l'extrémité de la voie optique d'émission (3).

2. Capteur selon la revendication 1 caractérisé en ce que les voies optiques (3, 5, 6)sont des fibres optiques ayant la même ouverture numérique, le même diamètre, et les mêmes propriétés optiques.

3. Capteur selon la revendication 1 ou 2 caractérisé en ce que la sonde (10) est mobile en rotation autour de d'un axe parallèle aux axes des voies optiques.

4. Capteur selon l'une quelconque des revendications 1 à 3 caractérisé en ce que chacun des convertisseurs optoélectroniques (7, 8) a une constante de temps de montée de conversion inférieure à un temps déterminé correspondant à une fréquence maximale prédéterminée d'échelons de distance.

5. Capteur selon la revendication 4 caractérisé en ce que le dispositif de traitement (9) comprend, connectés en aval de chacun des convertisseurs optoélectroniques (7, 8), des moyens amplificateurs de courant (9A, 9B) du signal électrique issu du convertisseur optoélectronique (7, 8) connecté, lesdits moyens amplificateurs (9A, 9B) ayant une bande passante comprise entre 0 Hz et N fois la fréquence maximale prédéterminée, N correspondant au rang de la première harmonique d'un signal à fréquence maximale prédéterminée, ayant une amplitude inférieure à une valeur seuil correspondant à une fraction prédéterminée de l'amplitude des échelons de distance.

6. Capteur selon la revendication 5 caractérisé en ce que le dispositif de traitement (9) comprend, connectée en aval des moyens amplificateurs de courant (9A, 9B), une carte d'acquisition numérique (9C) ayant des moyens d'échantillonnage simultané des signaux électriques amplifiés issus de chacun des moyens amplificateur de courant (9A, 9B), et des moyens de stockage temporaire d'une campagne de mesure ; et des moyens (9D) de stockage définitifs et de traitement ou post-traitement des valeurs numériques simultanées échantillonnées, la fréquence d'échantillonnage de la carte d'acquisition (9C) étant supérieure à au moins 2 fois la borne supérieure de la bande passante des moyens amplificateurs (9A, 9B).

7. Capteur selon la revendication 6 caractérisé en ce que les moyens de traitement ou de post-traitement (9D) comprennent des moyens pour calculer du rapport R(t) entre les valeurs numériques simultanées échantillonnées relatives à un élément de surface de la surface, en regard de la sonde au temps t, et pour déduire du rapport R(t) et d'une courbe référence ou équivalent la distance entre le capteur et ledit élément de surface, quel que soit l'état de surface de l'élément de surface concerné.

8. Capteur selon la revendication 7 caractérisé en ce que les moyens de traitement ou post-traitement (9D) comprennent un enregistrement de tableau référence à trois dimensions ou équivalent et des moyens pour déduire la réflectivité de l'élément de surface, dudit tableau, en fonction de la distance entre le capteur et l'élément de surface de l'une des valeurs numériques échantillonnées.

9. Capteur selon l'une quelconque des revendications 1 à 8 caractérisé en ce que les convertisseurs optoélectroniques (7, 8) sont des photodiodes à semi-conducteur Si.

10. Capteur selon l'une quelconque des revendications 1 à 8 caractérisé en ce que les convertisseurs optoélectroniques (7, 8) sont des photodiodes à semi-conducteur AsGa.

11. Capteur selon la revendication 1 à 10 caractérisé en ce que la longueur d'onde du rayonnement émis est sensiblement comprise dans la zone maximale de la réponse spectrale des convertisseurs optoélectroniques (7, 8).

12. Capteur selon l'une quelconque des revendications 4 à 11 caractérisé en ce que, la surface (1) en mouvement comprenant des têtes d'aubes (12, 13) d'un compresseur de turbine à gaz en fonctionnement, le capteur étant monté sur le stator de la turbine à gaz, la fréquence maximale prédéterminée étant égale à la fréquence de défilement des têtes d'aubes (12, 13) devant la sonde (10).

13. Capteur selon la revendication 12 caractérisé en ce qu'il comprend un capteur de position angulaire du rotor du compresseur connecté à la carte d'acquisition numérique, ladite carte d'acquisition numérique ayant des moyens pour acquérir la position angulaire du rotor au temps t, et les moyens de traitement ou post-traitement (9D) comprennent des moyens pour associer la position angulaire avec les valeurs numériques simultanées échantillonnées relatives à un élément de surface de la surface en regard de la sonde au temps t.

14. Procédé de mesure de position d'un élément de surface d'une surface en mouvement devant un capteur selon les revendications 1 à 12, caractérisé en ce que :
- un rayonnement (4) est émis vers la surface (1) par la voie optique d'émission (3);
- chacune des deux voies optiques de réception (5, 6) reçoit une partie (4A, 4B) du rayonnement 4 réfléchi ou diffusé par l'élément de surface en regard de la sonde à l'instant t, la voie optique de réception (5) la plus proche de la voie optique d'émission (3) captant une partie du rayonnement (4A) plus importante que celle (4B) de la voie optique de réception (6) la plus éloignée de la voie optique d'émission (3);
- chaque convertisseur optoélectronique (7, 8) convertit en un signal électrique la partie (4A,4B) du rayonnement 4 reçue par la voie optique de réception (5, 6) à laquelle il est couplé;
- chaque signal électrique converti est traité par le dispositif de traitement (9).

15. Procédé selon la revendication 14 caractérisé en ce que, dans le dispositif de traitement,
- chaque signal électrique est amplifié par les moyens amplificateurs de courant (9A, 9B), puis
- les signaux amplifiés présents en sortie des moyens amplificateur de courant (9A, 9B) sont simultanément échantillonnés et provisoirement stocker par les moyens d'échantillonnage (9C), puis les valeurs numériques simultanées échantillonnées relatives à un élément de surface de la surface, en regard de la sonde au temps t, sont stockées définitivement dans les moyens (9D) de stockage définitifs et de traitement ou post-traitement en vu d'un traitement ou d'un post-traitement.
